# EUROPÄISCHE PATENTSCHRIFT

(11) **EP 1 887 671 B1**
(45) Veröffentlichungstag und Bekanntmachung des Hinweises auf die Patenterteilung: **02.10.2013**
(21) Anmeldenummer: 06291278.7
(22) Anmeldetag: 07.08.2006
(51) Int. Cl.: H02G 15/34

(54) **Endenabschluss für ein supraleitfähiges Kabel**
Cable end for a superconductive cable
Extrémité de câble pour un câble supraconducteur

(43) Veröffentlichungstag der Anmeldung: 13.02.2008
(73) Patentinhaber: Nexans, 75008 Paris (FR)
(72) Erfinder: Schmidt, Frank, 30855 Langenhagen (DE); Frohne, Christian, 30657 Hannover (DE); Schippl, Klaus, 30659 Hannover (DE); Lallouet, Nicolas, 62200 Saint Martin Boulogne (FR)
(74) Vertreter: Döring, Roger

(56) Entgegenhaltungen:
- EP-A- 1 551 038
- EP-A2- 1 617 537
- WO-A-03/052775
- US-A- 4 535 596

## Beschreibung

Die Erfindung bezieht sich auf einen Endenabschluß für ein supraleitföhiges Kabel gemäß dem Oberbegriff des Patentanspruchs (US-A-4 535 596).

Ein supraleitfähiges Kabel hat elektrische Leiter aus einem speziellen Material, das bei ausreichend tiefen Temperaturen in den supraleitfähigen Zustand übergeht. Der elektrische Widerstand eines entsprechend aufgebauten Leiters geht dadurch gegen Null. Geeignete Materialien sind beispielsweise YBCO (Yttrium-Barium-Kupfer-Oxid) oder BiSCCO (Wismut-Strontium-Kalzium-Oxid). Ausreichend niedrige Temperaturen für ein derartiges Material liegen beispielsweise zwischen 67 K und 110 K, um den supraleitfähigen Zustand zu erreichen. Geeignete Kühlmittel sind beispielsweise Stickstoff, Helium, Neon und Wasserstoff oder Gemische dieser Stoffe, jeweils in flüssigem Zustand. Bekannt sind supraleitfähige Kabel mit kaltem Dielektrikum (WO 03/052775 A1) und mit warmem Dielektrikum (EP 1 551 038 A1).

Unabhängig vom Aufbau des supraleitfähigen Kabels und des mit demselben arbeitenden Systems ist dasselbe am Anfang und am Ende einer Übertragungsstrecke mit einem Endenabschluß ausgerüstet. Dieser besteht aus einem druckfesten, metallischen Innenbehälter und aus einem metallischen Außenbehälter, der vom Innenbehälter durch einen Zwischenraum getrennt ist, in dem eine Vakuumisolierung angebracht ist. Das supraleitfähige Kabel ragt in den Innenbehälter hinein, in welchem ein zumindest während des Betriebes unter Druck stehendes Kühlmittel enthalten ist, das bei Betrieb des Kabels durch einen das Kabel bzw. dessen Innenleiter unter Einschluß eines Zwischenraums umgebenden Kryostat bewegt wird. Der Innenbehälter muß so dimensioniert sein, daß er alle möglichen Druckerhöhungen, insbesondere schlagartige Druckerhöhungen, unbeschadet übersteht.

Die Gefahr einer solchen schlagartigen Druckerhöhung besteht bei einem Kabel mit kaltem Dielektrikum u. a. in einem elektrischen Durchschlag im Innenbehälter zwischen dem supraleitfähigen Kabel und der Wandung des Innenbehälters oder unabhängig vom Kabelaufbau bei transienten Vorgängen, wie beispielsweise einem Kurzschluß im Netz. Befindet sich das Kabel am Netz der Energieversorgung, so steht für einen dann entstehenden Lichtbogen ein extrem hoher Strom zu Verfügung, der erst nach ca. 0.1 s abgeschaltet werden kann. Die so eingebrachte Energie führt dazu, daß bereits ein großer Teil des im Innenbehälter enthaltenen Kühlmittels verdampft. Die dadurch im Innenbehälter entstehende Volumenzunahme führt zu einer transienten Druckerhöhung, die nicht schnell in üblicher Weise über Rohrleitungen abgebaut werden kann, so daß die Gefahr besteht, daß der Innenbehälter ohne zusätzliche Maßnahmen platzt.

Aus der eingangs erwähnten US-A-4 535 596 geht ein Endenabschluß für ein supraleitfähiges Kabel hervor, der aus einem druckfesten metallischen Innenbehälter, in dem ein flüssiges Kühlmittel vorhanden ist und in den das Kabel hineinragt, und aus einem metallischen Außenbehälter besteht, der vom Innenbehälter durch einen Zwischenraum getrennt ist, in dem eine Vakuumisolierung angebracht ist. Die Vakuumisolierung ist durch metallische Wärmeschilde in Bereiche unterteilt, in denen unterschiedliche Kühlmittel vorhanden sind. In der Wandung des Innenbehälters ist eine erste Berstscheibe und in der Wandung des Außenbehälters ist in Höhe der ersten Berstscheibe eine zweite Berstscheibe angebracht. Die Wärmeschilde der auch zwischen den beiden Berstscheiben vorhandenen Vakuumisolierung sind im Bereich der Berstscheiben durch Löcher unterbrochen.

Der Erfindung liegt die Aufgabe zugrunde, den Innenbehälter des eingangs geschilderten Endenabschlusses sowie die zwischen Innenbehälter und Außenbehälter angeordnete Vakuumisolierung vor einer Zerstörung infolge schlagartiger Druckerhöhung zu schützen.

Diese Aufgabe wird gemäß dem Kennzeichen des Patentanspruchs gelöst.

Die erste Berstscheibe, welche den Innenbehälter druckfest verschließt, wird so ausgelegt, daß sie bei Überschreiten eines maximal zulässigen Drucks im Innenbehälter öffnet. Sie begrenzt als Teil des Innenbehälters dessen mit einem Kühlmedium gefüllten Innenraum und wird dadurch selbst im Betriebsfall stark gekühlt. Auf ihrer Außenseite ist der abgegrenzte, evakuierte Berstraum mit einer Superisolierung angebracht, so daß zwischen Innenseite und Außenseite der ersten Berstplatte kein solches Temperaturgefälle besteht, das zu einem erhöhten Wärmeeinfall in den Innenbehälter führen könnte. Steigt der Druck im Innenbehälter insbesondere schlagartig über den zugelassenen Maximaldruck und damit über den Ansprechdruck der ersten Berstscheibe hinaus, so öffnet diese und entspannt den Inhalt des Innenbehälters zunächst in den Berstraum. Die zweite Berstscheibe, auf die während des ungestörten Betriebes keinerlei Innendruck ausgeübt wird, ist so ausgelegt, daß sie bereits bei einem Druck öffnet, der gegenüber dem zum Öffnen der ersten Berstscheibe erforderlichen Druck erheblich kleiner ist. Sie öffnet dann direkt nach dem Öffnen der ersten Berstscheibe, weil der Druck im Berstraum durch das Öffnen der ersten Berstscheibe wesentlich ansteigt. Auf diese Weise tritt bei zu hohem Druck im Innenbehälter die Flüssigkeit bzw. das Gas durch die dafür gebildeten Öffnungen aus demselben aus. Weitergehende Beschädigungen des Innenbehälters bzw. des Endenabschlusses, insbesondere ein Bersten des Endenabschlusses, insgesamt sind vermieden.

Das wird besonders auch durch den zwischen den beiden Berstscheiben liegenden, eine Superisolierung enthaltenden Berstraum erreicht, der gegenüber dem die Vakuumisolierung enthaltenden Zwischenraum durch eine druckfeste Wandung abgeschlossen ist. Der Berstraum ist ein durch die druckfeste Wandung in sich abgeschlossener und gegenüber dem Zwischenraum zwischen den beiden Behältern abgegrenzter Raum, so daß eine nach dem Öffnen der ersten Berstscheibe entstehende Druckerhöhung sich nur in Richtung der zweiten Berstscheibe auswirken kann. Die Vakuumisolierung zwischen den beiden Behältern des Endenabschlusses bleibt somit vom Berstvorgang verschont.

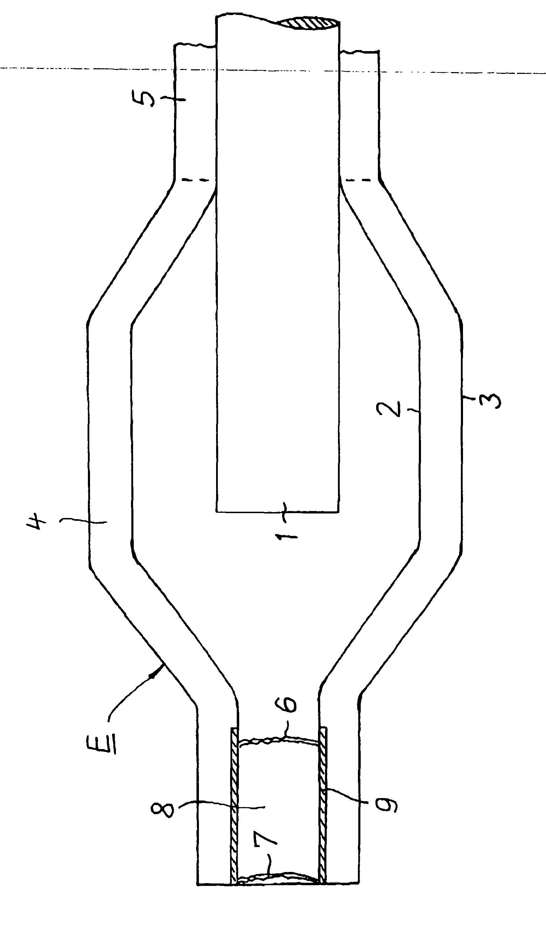

Ein Ausführungsbeispiel des Erfindungsgegenstandes ist in der Zeichnung dargestellt, deren einzige Figur in schematischer Darstellung einen Schnitt durch einen Endenabschluß für ein supraleitfähiges Kabel bzw. für ein System mit einem supraleitfähigen Kabel zeigt.

Mit 1 ist ein supraleitfähiges Kabel bzw. Kabelsystems mit beliebigem, an sich bekanntem Aufbau bezeichnet. Es ragt in einen Endenabschluß E hinein, der aus einem druckfesten metallischen Innenbehälter 2 und einem metallischen Außenbehälter 3 besteht. Der Außenbehälter 3 ist vom Innenbehälter 2 durch einen Zwischenraum 4 getrennt. Die beiden Behälter 2 und 3 bestehen mit Vorteil aus Edelstahl. Der Zwischenraum 4 ist evakuiert und es ist eine thermische Isolierung in demselben angebracht. Innenbehälter 2 und Außenbehälter 3 sind an einen das Kabel 1 umgebenden, an sich bekannten Kryostat 5 angeschlossen.

Vorzugsweise an seinem der Eintrittstelle des Kabels 1 gegenüber liegenden Ende ist der Innenbehälter 2 durch eine erste Berstscheibe 6 verschlossen. Etwa in gleicher Höhe wie die erste Berstscheibe 6 ist im Außenbehälter 3 eine denselben verschließende zweite Berstscheibe 7 angebracht. Zwischen den beiden Berstscheiben 6 und 7 befindet sich ein Berstraum 8, der gegenüber dem Zwischenraum 4 durch eine druckfeste Wandung 9 abgeschlossen ist. Der Berstraum 8 ist evakuiert und weist eine beispielsweise aus vielen Lagen einer mit Aluminium bedampften Kunststofffolie bestehende Superisolierung auf. Die Wandung 9 besteht beispielsweise aus Edelstahl.

Der Innenbehälter 2 ist mit einem flüssigen Kühlmedium gefüllt, beispielsweise mit Stickstoff, das zumindest während des Betriebes in Abhängigkeit von den Betriebsbedingungen für das Kabel 1 unter einem Druck von beispielsweise 3 bar bis 20 bar steht und bei Betrieb des Kabels 1 bzw. des zugehörigen Systems durch den zu demselben gehörenden Kryostat 5 bewegt wird.

Die beiden Berstscheiben 6 und 7 bestehen vorzugsweise aus Metall, beispielsweise aus Stahl. Ihre Abmessungen und ihre Verankerung im Innenbehälter 2 und am Außenbehälter 3 bzw. der Wandung 9 des Berstraums 8 werden so eingestellt, daß sie beim Überschreiten eines auf dieselben einwirkenden Drucks bersten bzw. öffnen.

Dadurch entsteht schlagartig eine Öffnung im Innenbehälter 2 und unmittelbar danach auch im Berstraum 8, so daß das Kühlmittel aus dem Endenabschluß E entweichen kann. Die Festigkeit der ersten Berstscheibe 6 ist wesentlich höher als die der zweiten Berstscheibe 7, da sie im störungsfreien Betrieb des Kabels 1 den druckfesten Verschluß des Innenbehälters 2 garantieren muß. Die erste Berstscheibe 6 soll so bemessen sein, daß sie einem Druck, der mindestens um 10 % über dem im Innenbehälter 2 herrschenden Druck liegt, noch Stand hält. Die zweite Berstscheibe 7 kann bereits bei wesentlich niedrigeren Drücken öffnen, die beispielsweise zwischen 1 bar und 5 bar liegen.

Der Berstraum 8 mit seiner Superisolierung stellt sicher, daß die Funktion der ersten Berstscheibe 6 nicht durch äußere Einflüsse beeinträchtigt wird. Die Umgebungstemperatur des Endenabschlusses E wird durch den Berstraum 8 gegenüber der ersten Berstscheibe 6 abgeblockt, so daß zwischen deren Innenseite einerseits und deren Außenseite andererseits kein Temperaturgefälle vorhanden ist. Gleichzeitig wird auf diese Weise der Wärmeeintrag in den Innenbehälter 2 an der Stelle der ersten Berstscheibe 6 stark vermindert.

Der Berstraum 8 selbst ist ein durch die druckfeste Wandung 9 in sich abgeschlossener und gegenüber dem Zwischenraum 4 zwischen den beiden Behältern 2 und 3 abgegrenzter Raum, so daß eine nach dem Öffnen der ersten Berstscheibe 6 entstehende Druckerhöhung sich nur in Richtung der zweiten Berstscheibe 7 auswirken kann. Die Wandung 9 muß dazu so ausgeführt sein, daß sie höhere Drücke als die zweite Berstscheibe 7 unbeschadet aushält, damit die im Berstraum 8 nach Öffnen der ersten Berstscheibe 6 entstehende Druckerhöhung nur zum Öffnen der zweiten Berstscheibe 7 führt.

Im Störungsfall mit einer schlagartigen Druckerhöhung im Innenbehälter 2 geschieht etwa folgendes:
Wenn im Innenbehälter 2 schlagartig ein zu hoher Druck entsteht, beispielsweise durch einen Durchschlag zwischen Kabel 1 und Innenbehälter 2, dann öffnet die erste Berstscheibe 6. Sie öffnet in den Berstraum 8, so daß unmittelbar danach auch die zweite Berstscheibe 7 öffnet. Beide Behälter 2 und 3 sowie die zwischen denselben, im Zwischenraum 4 befindliche Vakuumisolierung bleiben auf diese Weise unbeschädigt erhalten. Die aus dem Endenabschluß E austretende Flüssigkeit bzw. das aus demselben austretende Gas wird zunächst umweltfreundlich aufgefangen, beispielsweise in einem Kiesbett. Das Gas kann danach in die Atmosphäre entweichen.

## Patentansprüche

1. Endenabschluß für ein supraleitfähiges Kabel (1), bestehend aus einem druckfesten metallischen Innenbehälter (2), in dem ein flüssiges Kühlmittel vorhanden ist und in den das Kabel hineinragt, und aus einem metallischen Außenbehälter(3), der vom Innenbehälter durch einen Zwischenraum (4) getrennt ist, in dem eine Vakuumisolierung angebracht ist, bei welchem in der Wandung des Innenbehälters (2) eine erste Berstscheibe (6) und in der Wandung des Außenbehälters (3) in Höhe der ersten Berstscheibe (6) eine zweite Berstscheibe (7) angebracht ist, **dadurch gekennzeichnet, daß** zwischen den beiden Berstscheiben (6,7) ein gegenüber dem Zwischenraum (4) mit der Vakuumisolierung durch eine druckfeste Wandung (9) abgeschlossener, evakuierter Berstraum (8) vorgesehen ist, der eine Superisolierung enthält.

## Claims

1. Termination for a superconductive cable (1), comprising a pressure-tight metal inner container (2), which contains a liquid coolant and into which the cable protrudes, and a metal outer container (3), which is separated from the inner container by an intermediate space (4), which contains a vacuum insulation, wherein a first rupture disc (6) is placed in the wall of the inner container (2) and a second rupture disc (7) is placed in the wall of the outer container (3) in one level with the first rupture disc (6), **characterized in that** an evacuated rupture room (8) is provided between the two rupture diiscs (6,7), which is sealed from the intermediate space (4) with the vacuum insulation by a pressure-tight wall (9) and which contains a superinsulation.

## Revendications

1. Extrémité de câble pour un câble supraconducteur (1), constituée d'un logement interne métallique résistant à la pression (2), dans lequel est prévu un réfrigérant fluide et dans lequel pénètre le câble, et d'un logement externe métallique (3), qui est séparé du logement interne par un espace intermédiaire (4), dans lequel est réalisée une isolation sous vide, un premier disque d'éclatement (6) étant disposé dans la paroi du logement interne (2) et un deuxième disque d'éclatement (7) étant disposé dans la paroi du logement externe (3) à la hauteur du premier disque d'éclatement (6), **caractérisée en ce qu'**un espace d'éclatement (8) sous vide fermé par rapport à l'espace intermédiaire (4) ayant l'isolation sous vide par une paroi (9) résistant à la pression est prévu entre les deux disques d'éclatement (6, 7), lequel espace d'éclatement (8) contient une superisolation.
